# DEMANDE DE BREVET EUROPEEN

(11) **EP 1 041 208 A2**
(43) Date de publication de la demande: **04.10.2000**
(21) Numéro de dépôt: 00104953.5
(22) Date de dépôt: 08.03.2000
(51) Int. Cl.: E04B 1/48, F16B 35/00

(54) **Connecteur à cheville pour structures en beton**

(30) Priorité: 31.03.1999 IT VI990061
(71) Demandeur: TECNARIA S.p.A, 36061 Bassano del Grappa, Vicenza (IT)
(72) Inventeur: Guazzo, Francesco, 36061 Bassano del Grappa (Vicenza) (IT)
(74) Mandataire: Bettello, Pietro, Dott. Ing.

(57) **Abrégé**

Connecteur à cheville, destiné à être utilisé pour consolider la liaison entre une couche de béton existante (2) et une couche de béton rapportée (3), caractérisé en ce qu'il comprend une tige (4), de longueur convenablement calculée, une jambe inférieure (5), de préférence profilée et une plaque intermédiaire (6), ladite jambe étant apte à s'emmancher dans un trou (7) pratiqué dans la couche de béton existante (2), alors que ladite plaque est apte à prendre appui contre la surface de contact entre ladite couche existante (2) et ladite couche rapportée (3), une fois la jambe (5) emmanchée.

## Description

L'invention se rapporte à la réalisation d'un connecteur à cheville pour structures en béton, destiné à être utilisé pour consolider l'assemblage entre deux couches ou coulées de béton distinctes et adjacentes.

Dans le domaine de la construction en béton armé, il se présente souvent la nécessité de renforcer des structures qui ont subi des dommages par suite d'événements atmosphériques ou sismiques.

A titre d'exemple, on cite la nécessité de renforcer des piliers en béton armé, tels que ceux des ponts d'autoroutes, qui, avec le passage du temps, subissent un processus dit de "détérioration" dans lequel le béton tend à se désagréger, jusqu'à mettre à nu les fers d'armature.

Dans ce cas, l'intervention de renforcement du pilier consiste à réaliser une cage extérieure de retenue, elle aussi en béton, autour de ce dernier.

Dans ce type d'intervention, comme dans d'autres, similaires, où l'on procède à l'application d'un couche ou coulée supérieure de béton, il est nécessaire de garantir un assemblage réciproque stable entre les deux couches, pour pouvoir renforcer la structure dans son ensemble.

Au stade actuel de la technique, la liaison ou l'ancrage stable entre les deux couches de béton, celle existante et celle ajoutée, s'obtient par deux procédés différents.

Un premier procédé prévoit l'application sur la surface de la couche de béton existante, d'un produit chimique ou "primaire" qui joue le rôle d'adhésif avec la couche de béton rapportée.

Ce procédé présente l'inconvénient qu'en raison des conditions ambiantes, ou en présence d'une surface dans un mauvais état de conservation, le "primaire" perd sa qualité adhésive avec le temps.

Un deuxième procédé consiste à enfoncer des barres en acier dans la couche de béton existante en conservant une partie en saillie qui s'incorpore dans le lit de béton rapporté.

Ce deuxième procédé présente lui aussi l'inconvénient consistant en ce que l'adhésif avec lequel on remplit les trous, à l'intérieur desquels on emmanche les barres, perd ses qualités avec le temps et que, par conséquent, ses capacités de retenue diminuent.

Un premier but de la présente invention consiste à réaliser un élément de connexion entre deux coulées ou couches distinctes de béton qui ne nécessite pas l'utilisation d'un produit adhésif.

Un autre but consiste à réaliser un élément de connexion d'une construction simple et d'un montage rapide.

Un autre but consiste à réaliser un élément de raccordement qui puisse absorber les sollicitations et les efforts qui s'engendrent sur la surface de contact entre les deux couches.

Ces buts sont atteints conformément aux caractéristiques de la revendication 1.

On utilise avantageusement un connecteur en acier, muni d'un corps cylindrique, dont la partie terminale, convenablement rendue rugueuse, va s'encastrer de façon fixe dans un trou correspondant pratiqué sur la couche de béton existante et qui, en outre, présente, dans une position à peu près médiane, une plaque stabilisatrice, laquelle va s'appuyer sur la surface de contact de la couche de béton existante.

L'invention sera maintenant décrite dans une forme possible de réalisation, donnée seulement à titre d'exemple illustratif et non limitatif, à l'aide des dessins annexés sur lesquels :
- la Fig. 1 représente une vue en élévation du connecteur selon l'invention.
- la Fig. 2 représente la séquence des phases du connecteur.

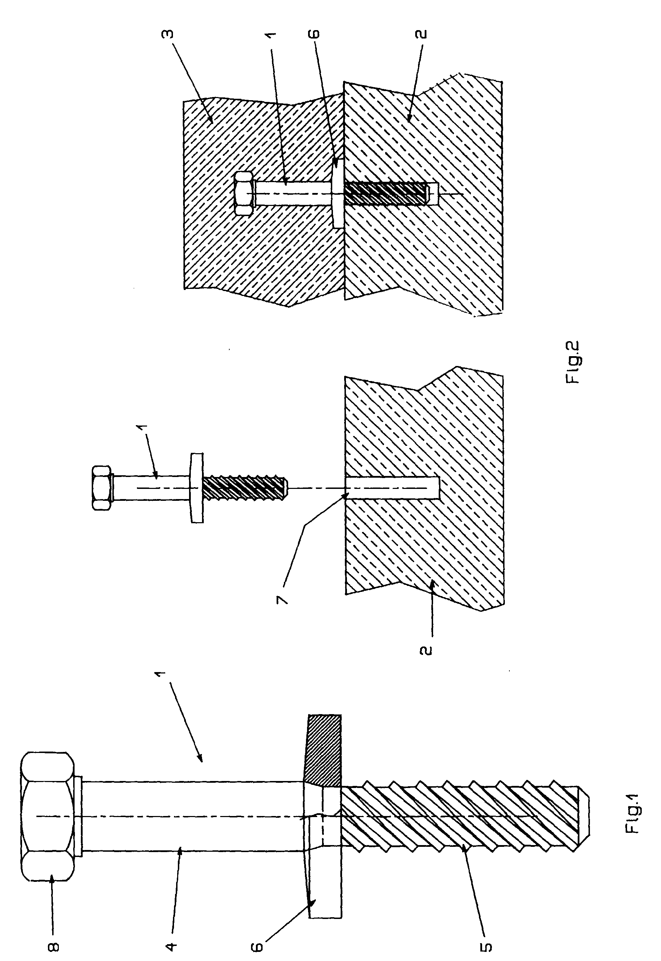

Comme on peut le voir sur la Fig. 1, le connecteur à cheville 1, apte à réaliser une connexion entre une couche de béton existante 2 et une couche de béton rapportée 3, est constitué d'une tige 4, de longueur convenablement calculée, ayant une jambe inférieure 5 profilée et qui est munie d'une plaque intermédiaire 6, à base plane, assemblée par estampage et refoulement à froid.

La fixation du connecteur à cheville 1 à la couche de béton existante 2 se réalise en pratiquant dans la couche de béton existante un trou 7 à l'intérieur duquel on emmanche la jambe inférieure 5 du connecteur précité.

Le diamètre du trou 7 étant légèrement inférieur au diamètre de la jambe 5 et en présence de l'effet d'action de grande adhérence que la surface profilée de la jambe exerce sur la partie du trou, le connecteur à cheville 1, après qu'il a été emmanché à force, est solidement ancré à la couche de béton existante 2.

La tige est avantageusement munie d'une tête élargie 8, de préférence hexagonale, pour faciliter l'action d'emmanchement à force de la jambe 5 du connecteur dans le trou 7.

En fonctionnement, lorsque le connecteur à cheville 1 est complètement enfoncé dans le trou 7, la plaque intermédiaire 6 va s'appuyer sur la surface de la couche de béton existante 2.

Comme on peut le déduire de la Fig. 2, après que la couche de béton rapportée 3 s'est solidifiée, la plaque intermédiaire 6 va constituer un interface entre couche existante 2 et nouvelle couche 3 qui, grâce à sa large base, empêche les phénomènes de descellement dûs au glissement d'une couche sur l'autre, outre le fait qu'elle contribue à augmenter notablement la résistance à la rupture du connecteur à cheville 1 dans la même zone.

Finalement, pour garantir une plus grande résistance aux agents corrosifs, le connecteur à cheville 1 est avantageusement soumis à une galvanisation à chaud préventive.

La fixation du connecteur à cheville selon l'invention ne nécessite pas l'utilisation de produits adhésifs, mais seulement la réalisation d'un simple trou dans la couche de béton de la structure de renforcement, que cette dernière soit une dalle, une poutre ou un pilier.

## Revendications

1. Connecteur à cheville, destiné à être utilisé pour consolider la liaison entre une couche de béton existante (2) et une couche de béton rapportée (3), caractérisé en ce qu'il comprend une tige (4), de longueur convenablement calculée, une jambe inférieure (5), de préférence profilée et une plaque intermédiaire (6), ladite jambe étant apte à s'emmancher dans un trou (7) pratiqué dans la couche de béton existante (2), alors que ladite plaque est apte à prendre appui contre la surface de contact entre ladite couche existante (2) et ladite couche rapportée (3), une fois la jambe (5) emmanchée.

2. Connecteur à cheville selon la revendication 1, caractérisé en ce que la jambe (5) possède un diamètre légèrement supérieur à celui du trou (7) dans lequel elle doit être emmanchée, de manière qu'également par l'effet de l'action d'adhérence que la surface profilée de ladite jambe exerce sur la paroi dudit trou, ledit connecteur à cheville (1), après qu'il a été emmanché à force dans ce trou, soit solidement ancré à la couche de béton existante (2).

3. Connecteur à cheville selon les revendications 1 et 2, caractérisé par le fait que la tige (4) est munie d'une tête élargie (8), de préférence de forme hexagonale, pour faciliter l'action d'emmanchement à force de la jambe (5) dans le trou (7).

4. Connecteur à cheville selon une ou plusieurs des revendications précédentes, caractérisé par le fait que, lorsque la jambe (5) est complètement emmanchée dans le trou (7), la plaque intermédiaire (6) va s'appuyer sur la surface de la couche de béton (2) existante.

5. Connecteur à cheville selon une ou plusieurs des revendications précédentes, caractérisé par le fait qu'après que la couche de béton rapportée (3) s'est solidifiée, la plaque intermédiaire (6) est apte à constituer une interface entre la couche existante (2) et la couche rapportée (3) , de manière à empêcher les phénomènes de descellement dûs au glissement d'une couche sur l'autre.

6. Procédé de fabrication d'un connecteur à cheville, selon une ou plusieurs des revendications précédentes, caractérisé par le fait qu'il comprend une phase de blocage de la plaque intermédiaire (6) sur la tige (4) par estampage et refoulement à froid.

7. Procédé de fabrication d'un connecteur à cheville selon la revendication 6, caractérisé par le fait qu'il comprend une phase préalable de galvanisation à chaud dudit connecteur.
